# FASCICULE DE BREVET EUROPEEN

(11) **EP 0 645 839 B1**
(45) Date de publication et mention de la délivrance du brevet: **12.05.1999**
(21) Numéro de dépôt: 94402125.2
(22) Date de dépôt: 23.09.1994
(51) Int. Cl.: H01Q 3/04, G01S 13/42

(54) **Procédé de gestion du faisceau d'une antenne tournante à balayage électronique**
Verfahren zur Strahlführung einer Drehantenne mit elektronischem Absuchen
Method for beam managing of a rotatable antenna with electronic scanning

(30) Priorité: 28.09.1993 FR 9311503
(43) Date de publication de la demande: 29.03.1995
(73) Titulaire: THOMSON-CSF, 75008 Paris (FR)
(72) Inventeur: Bardy, Marie-Claude, Thomson-CSF, SCPI, F-92402 Courbevoie Cedex (FR)
(74) Mandataire: Benoit, Monique

(56) Documents cités:
- EP-A- 0 440 200
- US-A- 4 649 390
- US-A- 5 036 333
- PROCEEDINGS OF THE 1991 IEEE NATIONAL RADAR CONFERENCE, Mars 1991, LOS ANGELES,CALIFORNIA pages 6 - 10 PHAM 'LOCATION ACCURACY IN X-BAND MULTIFUNCTION RADAR'
- PROCEEDINGS OF THE 1991 IEEE NATIONAL RADAR CONFERENCE, Mars 1991, LOS ANGELES,CALIFORNIA pages 88 - 92 CUMMINGS ET AL. 'RADAR RESOURCE MANAGEMENT FOR MECHANICALLY ROTATED, ELECTRONICALLY SCANNED PHASED ARRAY RADARS'
- RCA ENGINEER, no.31-5, Novembre 1986, PRINCETON,NJ pages 68 - 76 MULLE 'A radar/phased array radar primer'

## Description

La présente invention concerne un procédé de gestion du faisceau d'une antenne tournante à balayage électronique. Elle s'applique notamment aux radars multifonctions fixes ou mobiles par rapport à l'environnement, ce dernier cas étant par exemple celui d'un radar maritime.

La conjugaison d'une antenne tournante et d'un balayage électronique permet d'obtenir un radar multifonctions facilement adaptable à son environnement, réalisant une fonction de veille et une fonction de poursuite par exemple. Le balayage électronique, permet, à une position d'antenne donnée, de pointer le faisceau dans n'importe quelle direction située à l'intérieur d'un cône appelé cône de visibilité. Les dimensions du cône sont notamment définies par la déflexion maximale autorisée en azimut et en site.

Un tel radar nécessite la présence d'un organe devant lui fournir en temps réel les caractéristiques du faisceau à émettre, notamment sa position et la forme d'onde émise, ces caractéristiques constituant la commande du faisceau. La gestion du faisceau consiste à organiser en temps réel l'enchaînement des commandes du faisceau à exécuter par le radar.

Il a été demandé à ce type de radar de réaliser de plus en plus de fonctions. Ainsi, à la veille de l'espace qui l'entoure et à la poursuite de cibles, se sont ajoutées des veilles spécifiques, des mesures sur des cibles entrant dans un gabarit donné, des actions antibrouillage ainsi que des absences d'émissions dans certaines directions. Par la suite, les spécifications des menaces se sont durcies et les gabarits des cibles à poursuivre sont devenus plus sévères. Les missions demandées au système radar sont devenues plus importantes, notamment avec l'introduction de la conduite de tir. Compte tenu de ces performances demandées, le catalogue des formes d'onde disponibles a augmenté. Des nouveaux modes de fonctionnement ont été définis, notamment la confirmation des objets nouveaux dans le même tour d'antenne que la veille qui a donné lieu à la détection. La notion de boucles urgentes est apparue, du type enchaînement veille - confirmation ou poursuite sur cible engagée - ordre de télécommande. Certaines de ces missions imposent des temps de réaction rapide à l'intérieur du système radar.

Enfin, certaines de ces fonctions, notamment la poursuite de cibles associée à des gabarits de plus en plus sévères, ont imposé des vitesses de rotation plus grande de l'antenne, atteignant par exemple un tour par seconde environ.

A ces vitesses, pour la veille, il devient difficile de visiter l'ensemble de l'espace en veille en un tour d'antenne. La fonction de veille doit cependant continuer à être assurée.

Le but de l'invention est notamment de permettre à un radar à antenne tournante à balayage électronique d'assurer la fonction de veille tout en ayant une grande vitesse de rotation avec un nombre important de fonctions à accomplir.

A cet effet, l'invention a pour objet un procédé de gestion du faisceau d'une antenne tournante à balayage électronique à partir de demandes de pointages du faisceau, organisant l'enchaînement des commandes de pointages fournies à un système de formation du faisceau par l'intermédiaire d'une table de commandes comprenant les paramètres nécessaires à l'exécution des pointages, l'antenne ayant un cône de visibilité dans lequel le balayage électronique permet de réaliser les pointages, caractérisé en ce que la position de l'antenne étant repérée selon un pas angulaire, le passage d'un pas à un autre générant un signal de synchronisation, pour, chaque tour d'antenne, l'enchaînement des commandes est organisé selon trois phases associées chacune à une zone de l'espace :
- une première phase de préparation des pointages demandés avant leur entrée dans le cône de visibilité, consistant à définir les paramètres de la table des commandes associés à chaque pointage demandé ;
- une deuxième phase de réalisation des pointages demandés présents dans le cône de visibilité, une nouvelle table de commandes étant envoyée à partir de chaque signal de synchronisation en fonction des pointages non encore réalisés ;
- une troisième phase de repérage des pointages demandés sortis du cône de visibilité et non réalisés, ceux-ci étant mémorisés et réalisés dans un tour suivant, un pointage non réalisé pouvant être abandonné.

L'invention a pour principaux avantages qu'elle permet d'optimiser l'occupation du temps radar, qu'elle permet d'adapter facilement les caractéristiques de la commande du faisceau aux informations d'environnement issues du traitement de données radar et qu'elle permet d'adapter le renouvellement de la veille à la charge du radar.

D'autres caractéristiques et avantages de l'invention apparaîtront à l'aide de la description qui suit faite en regard des dessins annexés qui représentent :
- la figure 1, une illustration du rôle de la gestion du faisceau d'une antenne tournante à balayage électronique ;
- la figure 2, une illustration de la rotation de l'antenne précitée et de son cône de visibilité ;
- la figure 3, le déploiement de l'espace entourant l'antenne découpé en colonnes ;
- la figure 4, l'espace précédent découpé en espaces élémentaires de pointage ;
- la figure 5, une illustration d'une position du cône de visibilité de l'antenne dans l'espace précité ;
- la figure 6, l'espace précité découpé en trois zones fonction de la position du cône de visibilité ;
- la figure 7, pour un pointage donné, une illustration de ses différentes phases de traitement ;
- la figure 8, les phases précitées associées à une génération automatique de demandes de pointages de veille ;
- les figures 9 et 10, une illustration du mécanisme de génération automatique précité.

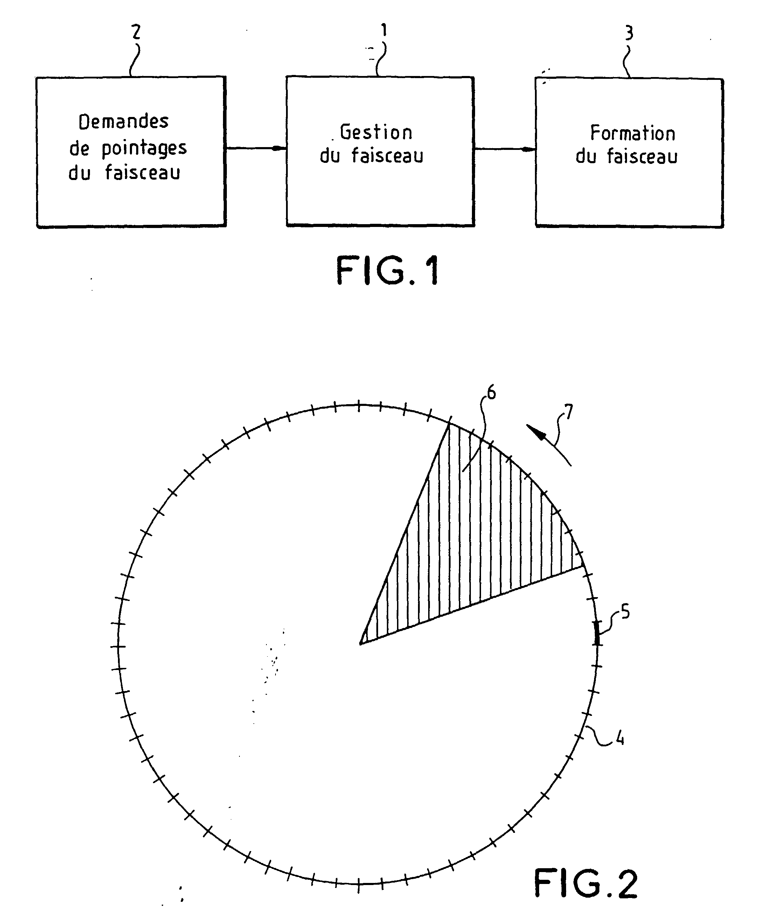

La figure 1 illustre le rôle de la gestion du faisceau 1 d'une antenne tournante à balayage électronique. Des demandes de pointages du faisceau 2 fournis par exemple par le système de traitement d'un radar multifonctions utilisant l'antenne précitée sont fournies à la gestion du faisceau 1. Ces pointages sont par exemples destinés à la réalisation de plusieurs fonctions, notamment une fonction de veille et de poursuite de cibles. La gestion du faisceau fournit à un système de formation du faisceau 3 l'enchaînement des commandes de pointage du faisceau à réaliser. La gestion du faisceau a pour rôle d'organiser cet enchaînement parmi tous les pointages du faisceau à réaliser, compte tenu notamment de la vitesse de rotation de l'antenne.

La figure 2 présente la rotation de l'antenne par une trajectoire circulaire décrite 4, en azimut par exemple. La position de l'antenne est repérée selon un pas angulaire ou circulaire 5, régulier par exemple. L'antenne possède un cône de visibilité 6 à l'intérieur duquel le balayage électronique peut réaliser n'importe quel pointage du faisceau. Ce cône 6 tourne avec l'antenne comme le symbolise une flèche 7.

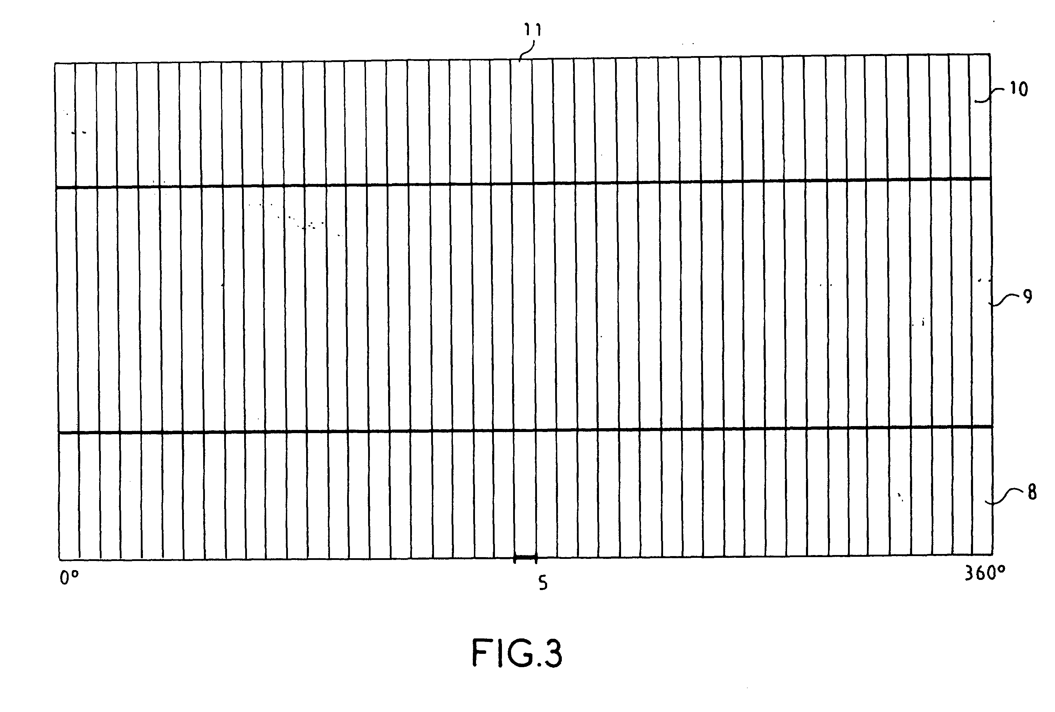

La figure 3 présente l'espace entourant l'antenne déployé de 0° à 360°. Ce déploiement est limité en haut et en bas par les limites d'atteinte du faisceau de l'antenne. Il peut être partagé en plusieurs zones, par exemple basse altitude 8, moyenne altitude 9 et haute altitude 10. Chaque pas circulaire 5 définit une colonne 11, l'espace déployé étant ainsi formé d'une suite de colonnes. La largeur angulaire d'une colonne est par exemple de quelques degrés, et notamment nettement inférieure à celle du cône de visibilité 6.

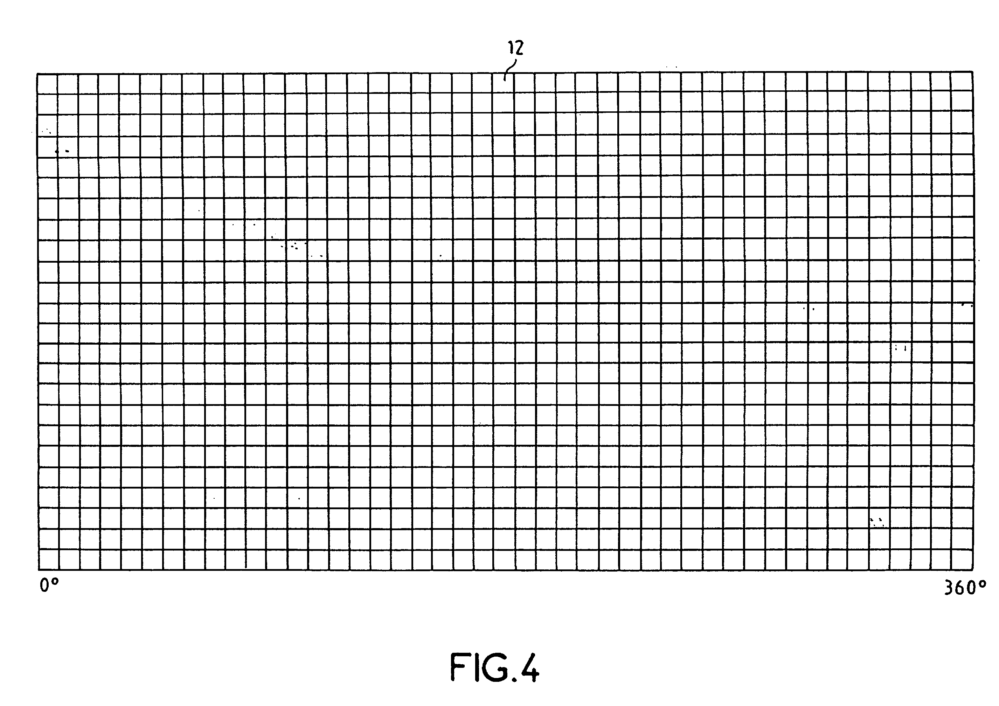

La figure 4 présente l'espace précédent découpé en espaces élémentaires de pointage, réguliers ou non. Chaque espace élémentaire, repéré dans un repère x, y, z, est associé par exemple à un pointage du faisceau de l'antenne.

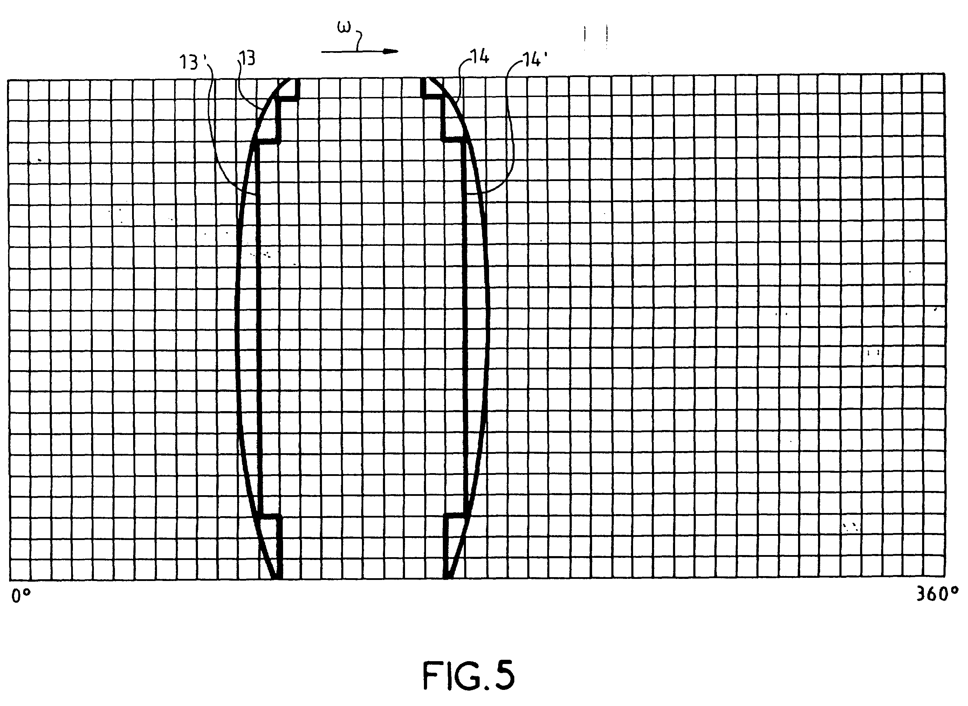

La figure 5 illustre une position donnée, à un instant donné, du cône de visibilité délimité par deux courbes 13, 14 dans cet espace découpé. Ce cône se déplace à la vitesse w de rotation de l'antenne. Ce cône coupant des.espaces élémentaires de pointage, il est par exemple remplacé par un cône plus étroit 13', 14' inscrit dans celui-ci et ne coupant pas d'espaces élémentaires de pointage. Pour chaque position donnée du cône, le procédé selon l'invention organise l'enchaînement des pointages du faisceau d'antenne à l'intérieur de ce cône, chaque pointage dirigeant par exemple le faisceau vers un espace élémentaire de pointage 12. Comme indiqué précédemment, un pointage peut être associé à un espace élémentaire 12, et il est possible de faire appel indifféremment à l'une ou l'autre de ces notions. Le procédé selon l'invention s'appuie sur une notion de vie des pointages. Un pointage naît dès qu'une demande apparaît, cette demande pouvant venir du système de traitement d'un radar ou être générée automatiquement, par exemple dans le cas de la fonction de veille. Sauf pour des pointages urgents, confirmation d'une détection ou ordre de télécommande par exemple, le pointage vit un certains temps avant d'entrer dans le cône de visibilité 6. Un pointage meurt lorsqu'il a quitté le cône de visibilité et que les informations concernant son exécution sont exploitées, c'est à dire que le pointage a par exemple effectivement eu lieu.

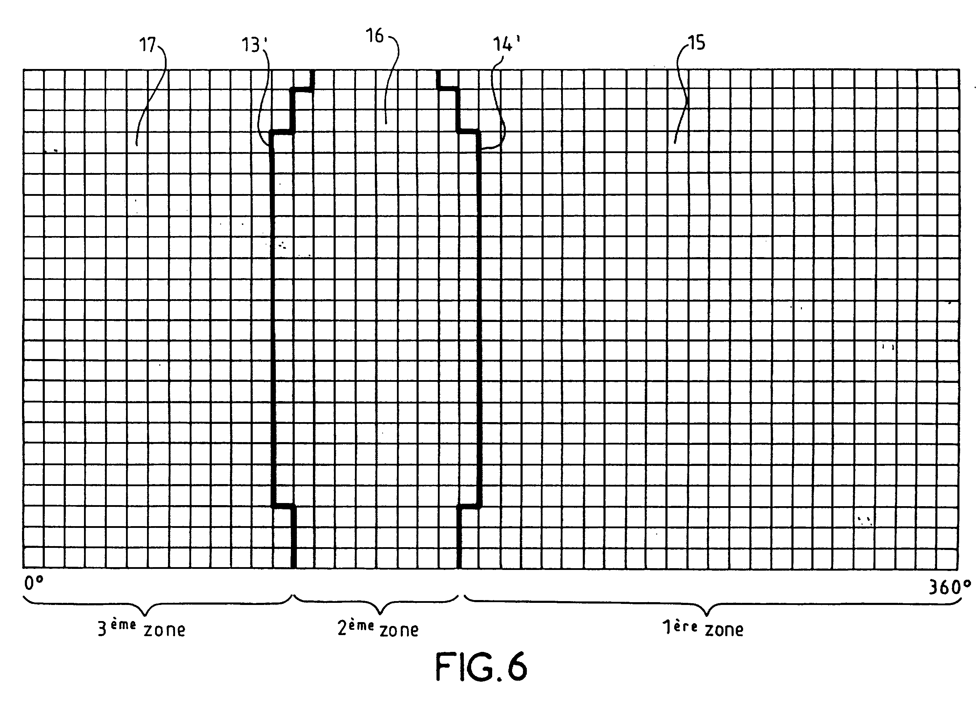

Comme l'illustre la figure 6, il est alors possible, pour une position donnée de l'antenne, c'est à dire de son cône de visibilité, de définir trois zones 15, 16, 17. Une première zone 15 de naissance des pointages non urgents, non encore présents dans le cône de visibilité, une deuxième zone 16 notamment de naissance des pointages urgents, présents dans le cône de visibilité et une troisième zone 17 de mort des pointages, venant de quitter le cône de visibilité. Une zone de naissance d'un pointage démarre de préférence à une position d'antenne assurant que le même pointage, s'il existe au tour précédent est effectivement mort. La durée de vie d'un pointage est ainsi inférieure à la durée d'un tour d'antenne.

Selon l'invention, à chaque fois que l'antenne franchit un pas circulaire 5, un signal de synchronisation est généré. Un pas initial ayant été repéré, cela permet d'indiquer après chaque signal de synchronisation dans quel pas évolue l'antenne, donc le cône de visibilité, et d'assimiler le déplacement continu du cône en rotation à un déplacement discret selon le pas circulaire 5 précédemment défini, les positions discrètes successives du cône de visibilité étant parfaitement connues.

Selon l'invention l'association des zones 15, 16, 17 précédemment définies et de ces positions discrètes successives parfaitement connues permet, d'organiser l'enchaînement des commandes de pointage du faisceau selon trois phases consécutives. Une première phase traite les pointages avant leur entrée dans le cône de visibilité, une deuxième phase traite les pointages présents dans le cône de visibilité et une troisième phase traite les pointages ayant quitté le cône de visibilité. Pour une position donnée du cône de visibilité, chaque phase correspond à une zone, c'est à dire que les pointages traités dans chaque phase appartiennent à une zone et une seule, la première phase correspondant à la première zone 15, la deuxième phase correspondant à la deuxième zone 16 et la troisième phase correspondant à la troisième zone 17.

Le déroulement des phases, dans le domaine temporel, peut ainsi être associé sans ambiguïté au déroulement de l'éclairement des zones précitées, dans le domaine spatial, par le cône de visibilité 6 de l'antenne, créant ainsi une association espace-temps bien définie entre les phases de traitement des pointages et leurs zones dans l'espace, cela notamment grâce par exemple à l'utilisation du signal de synchronisation créé à partir du passage d'un pas circulaire à un autre.

A chaque signal de synchronisation, la partition de l'espace dans les trois zones 15, 16, 17 précitée est remise à jour, les pointages subissant, dans l'intervalle de temps compris entre les deux signaux de synchronisation successifs, des traitements spécifiques suivant la zone à laquelle ils appartiennent.

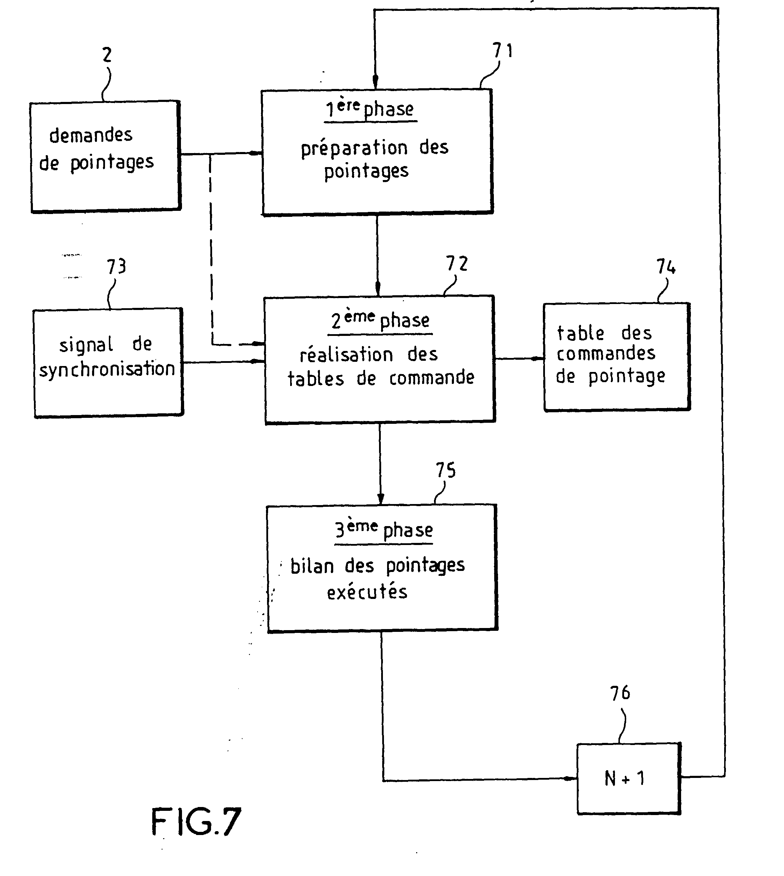

La figure 7, illustre le cycle de vie d'un pointage donné par le déroulement des phases de traitement successives qu'il subit. La première phase 71, associée à la première zone 15 précitée, concerne le début de vie des pointages, fonction des demandes de pointage 2. Une fois né, le pointage est préparé de façon à construire la table des commandes du faisceau. Cette préparation détermine notamment les caractéristiques à envoyer concernant le pointage, position, forme d'onde, ordre de priorité ou d'urgence et format du message par exemple, et plus généralement tout ce que le système de formation du faisceau a besoin pour exécuter le pointage du faisceau.

La deuxième phase 72, associée à la deuxième zone 16 précitée, concerne tous les pointages vivants, c'est à dire tous les pointages situés dans le cône de visibilité. A chaque signal de synchronisation 73, une nouvelle table de commande des pointages 74 est envoyée au système de formation du faisceau, cette table constituant l'enchaînement des pointages réalisés entre deux signaux de synchronisation. La table de commande à envoyer au prochain signal de synchronisation est établie à partir des pointages nés dans la première phase et pour lesquels aucune commande n'a encore été envoyée.

Elle est aussi établie en fonction des pointages urgents nés depuis la dernière synchronisation, ainsi qu'en fonction des priorités ou urgences relatives entre tous ces pointages, une durée d'exécution de pointages maximum donné pouvant être envoyé à chaque signal de synchronisation. Elle peut encore être aussi fonction de la charge de travail du radar.

La troisième phase 75, associée à la troisième zone 17 précitée, concerne tous les pointages vivants sortis du cône de visibilité. Un bilan des pointages exécutés est établi en repérant les pointages pour lesquels une commande a été envoyée et ceux pour lesquels aucune commande n'a été envoyée, faute de temps notamment. Certaines informations concernant ces pointages non exécutés sont éventuellement mémorisés pour être exploitées au tour suivant. Les informations concernant les pointages exécutés sont éliminées, ces pointages devenant morts. Des pointages jugés non importants peuvent aussi mourir sans avoir été réalisés.

Après cette troisième phase 75 débute une nouvelle première phase 71 correspondant au tour suivant d'antenne 76.

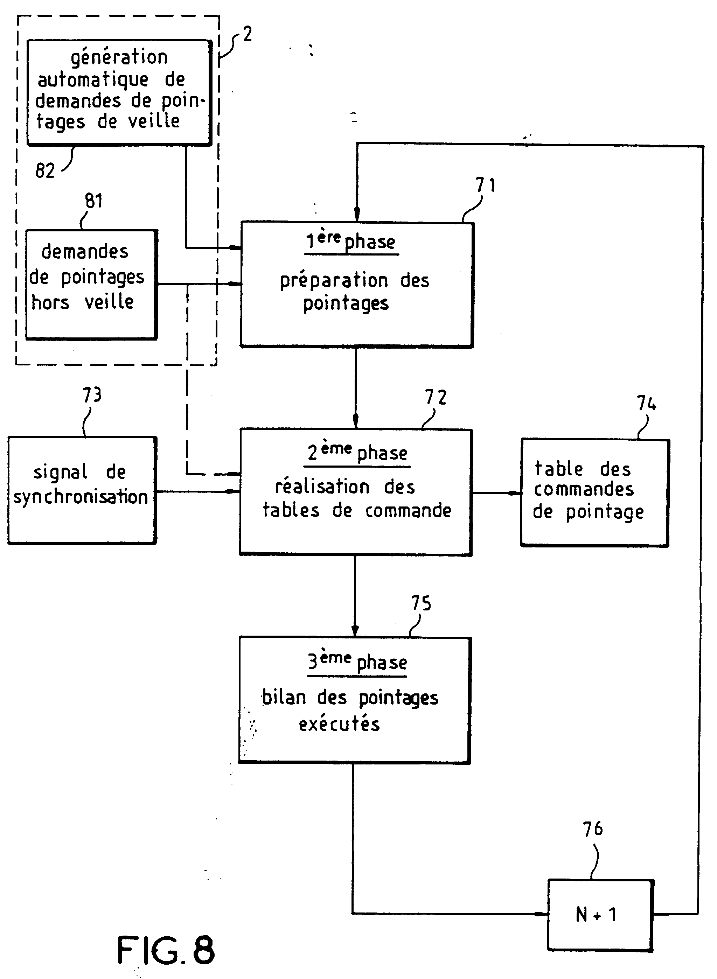

Une fonction permanente généralement utilisée est la fonction de veille. Celle-ci nécessite de balayer tout l'espace par le faisceau d'antenne. L'augmentation de la vitesse de rotation de l'antenne ainsi que le nombre croissant d'autres fonctions à réaliser rend difficile de balayer tout l'espace en un seul tour d'antenne. Selon l'invention le balayage de l'espace pour la fonction veille est réalisé en un nombre N de tours. A cet effet, une génération automatique de demandes de pointage de veille est créée comme l'illustre la figure 8.

Les demandes de pointage 2 sont séparées en demandes de pointages hors veille 81 et en demandes de pointages de veille 82 obtenues par une génération automatique. La génération automatique de la veille a notamment pour objet de donner naissance aux pointages de veille, dans la première phase 71 précitée, c'est à dire de sélectionner les pointages de veille qui doivent être réalisés à leur prochain passage dans le cône de visibilité de l'antenne. La sélection s'appuie par exemple sur la partition beau temps, mauvais temps de l'espace établie par le traitement de données du radar qui impose selon l'un ou l'autre cas des formes d'onde spécifiques pour la partie d'espace concernée.

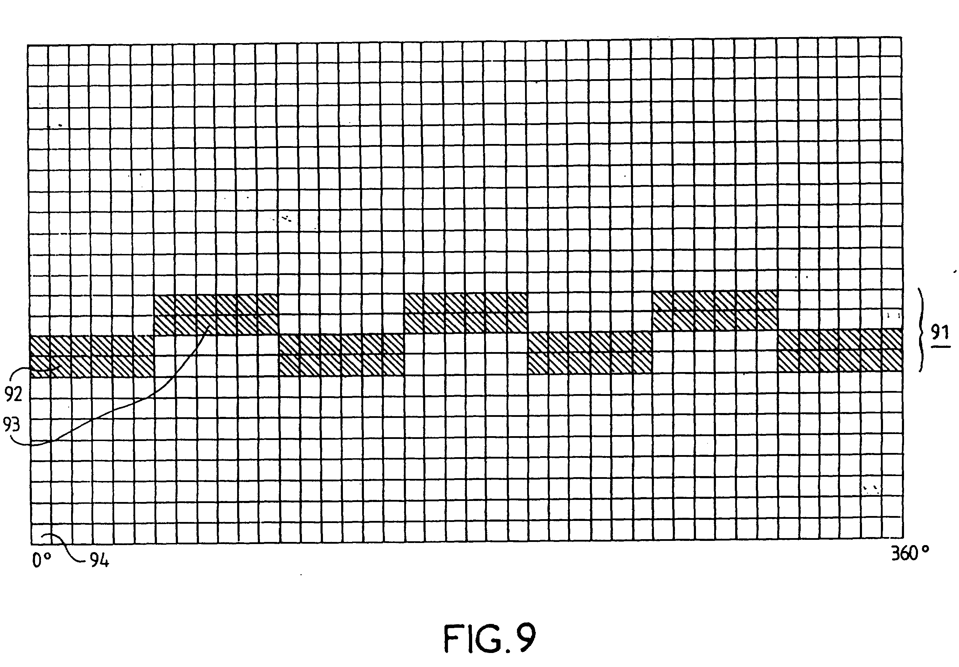

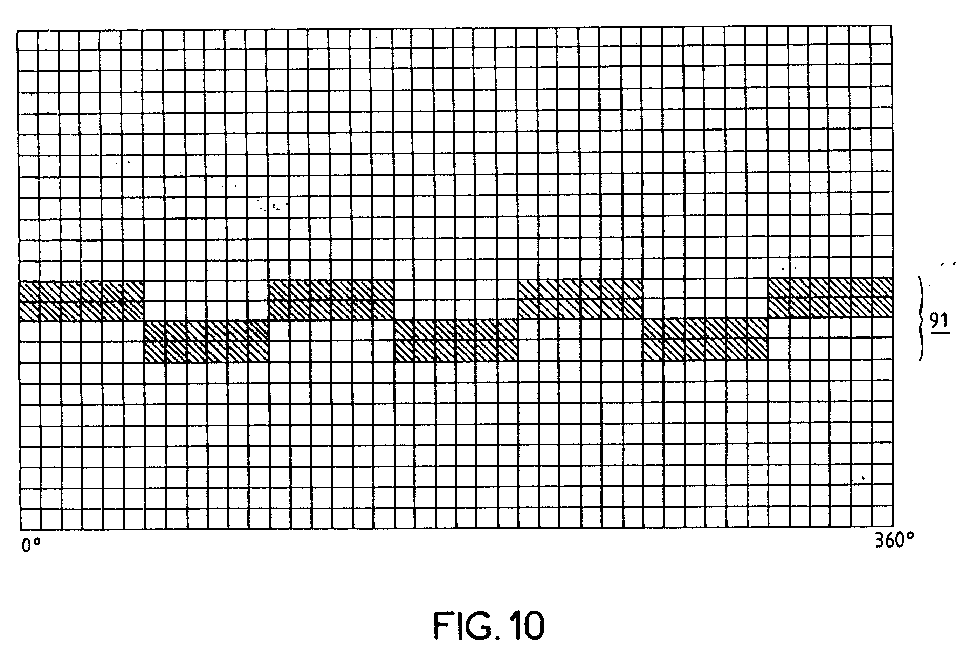

Selon l'invention, une mise en oeuvre de la génération automatique des pointages de veille peut par exemple être réalisée de la façon décrite ci-après, comme l'illustre les figures 9 et 10 pour une partie de l'espace donnée correspondant par exemple à une moyenne altitude.

Cette mise en oeuvre de la veille permet notamment d'avoir une grande maîtrise de la génération de la veille.

Les pointages sont regroupés en p motifs consécutifs 92, 93, p étant le nombre de tours d'antenne nécessaires pour que la répétition des motifs recouvre tout l'espace 91 considéré. p est donc la période de sélection de cet espace. Dans l'exemple de la figure 9, p = 2. Chaque motif 92 est choisi sur r colonnes consécutives. Dans l'exemple de la figure 9, r = 6. r est appelé le facteur de répétition du motif pour la période p. Au bout de r colonnes, la sélection s'effectue sur le motif suivant 93, et au bout de p x r colonnes le retour s'effectue sur le premier motif 92. Dans l'exemple des figures 9 et 10, l'espace 91 est ainsi totalement sélectionné en deux tours d'antennes. La figure 9 représente les pointages sélectionnés lors d'un premier tour d'antenne, et la figure 10 représente les autres pointages sélectionnés lors du deuxième tour d'antenne, et ainsi de suite. Les facteurs de répétition sont par exemple choisis de façon qu'au passage à la première colonne 94, au passage au repère 0°, il n'y ait pas de recouvrement ou de rupture des motifs.

Les motifs peuvent être différents d'une partie de l'espace à l'autre, selon l'altitude. De même la période p peut être différente d'une partie à l'autre de l'espace. Un modèle de génération de veille est par exemple défini en beau temps et un autre en mauvais temps. La génération de la veille s'effectue.par pas, en azimut par exemple. Pour chaque pas, les deux modèles, beau temps et mauvais temps, étant par exemple entretenus, le motif à suivre est déterminé, en fonction notamment des motifs suivis aux colonnes précédentes et des facteurs de répétition. Ensuite, les pointages du modèle dont le mode de temps correspond par exemple à celui préconisé dans la partition beau temps- mauvais temps sont effectivement sélectionnés.

Le procédé selon l'invention permet notamment de garder a priori une charge prévue en veille constante, de conserver une charge radar en veille a priori homogène en azimut et d'assurer que l'ensemble des pointages de veille est exécuté, ou en d'autres termes que l'espace est balayé en veille, au bout d'un nombre de tours donné. S'il existe un manque en veille, le bilan de la troisième phase 75 permet d'exécuter un pointage non réalisé au tour ou à la période p suivante.

Le mécanisme de génération de veille précédemment défini peut être soumis à des contraintes physiques de durée de visibilité par tour d'une région de l'espace. En effet, si l'occupation du radar est telle que dans une région de l'espace, tous les pointages d'un même domaine de menace ne peuvent être visités en veille, ces derniers sont tous en retard de tour à tour et la veille ne peut être assurée au bout du nombre de tours prévu. Pour limiter ce phénomène, il est possible de gérer plusieurs modèles de veille de durée allouées différentes. Une évaluation de la charge radar peut alors être effectuée pour décider de commuter de modèle de veille.

La découpe de l'espace en espaces élémentaires de pointage 12 peut être par exemple adaptée à la rotondité de la terre, le nombre d'espaces élémentaires de pointage 12 diminuant notamment avec l'augmentation de l'altitude.

## Revendications

1. Procédé de gestion du faisceau d'une antenne tournante à balayage électronique à partir de demandes de pointages du faisceau (2), caractérisé en ce qu'organisant l'enchaînement des commandes de pointages fournies à un système de formation du faisceau (3) par l'intermédiaire d'une table de commandes (74) comprenant les paramètres nécessaires à l'exécution des pointages, l'antenne ayant un cône de visibilité (6) dans lequel le balayage électronique permet de réaliser les pointages, la position de l'antenne étant repérée selon un pas angulaire (5), le passage d'un pas à un autre générant un signal de synchronisation (73), pour chaque tour d'antenne, l'enchaînement des commandes est organisé selon trois phases (71, 72, 75) associées chacune à une zone (15, 16, 17) de l'espace :
- une première phase (15, 71) de préparation des pointages demandés avant leur entrée dans le cône de visibilité, consistant à définir les paramètres de la table des commandes associés à chaque pointage demandé;
- une deuxième phase (16, 72) de réalisation des pointages demandés présents dans le cône de visibilité ;
- une nouvelle table de commandes étant envoyée à partir de chaque signal de synchronisation en fonction des pointages non encore réalisés ;
- une troisième phase (17, 75) de repérage des pointages demandés sortis du cône de visibilité et non réalisés, ceux-ci étant mémorisés et réalisés dans un tour suivant, un pointage non réalisé pouvant être abandonné.

2. Procédé selon la revendication 1, caractérisé en ce que des pointages urgents demandés pendant la deuxième phase sont réalisés dans cette phase.

3. Procédé selon l'une quelconque des revendications précédentes, caractérisé en ce que les zones (15, 17) associées aux premières (71) et troisièmes phases ne se chevauchent pas.

4. Procédé selon l'une quelconque des revendications précédentes, caractérisé en ce que les demandes de pointages destinées à une fonction de veille sont générés automatiquement (82) et traitées comme les autres demandes de pointage (81) selon les trois phases (71, 72, 75).

5. Procédé selon la revendication 4, caractérisé en ce que, l'espace autour de l'antenne étant découpé en espaces élémentaires de pointage, les espaces élémentaires (12) était inscrits dans des colonnes (11), pour la génération automatique, les pointages sont regroupés en un nombre p de motifs consécutifs, p étant le nombre de tours d'antenne nécessaires pour que la répétition de motifs recouvre l'espace considéré (91), chaque motif (92) étant choisi sur un nombre r de colonnes consécutives, au bout de r colonnes le passage s'effectuant sur un motif suivant (93), au bout de pxr colonne le retour s'effectuant sur le premier motif (92).

6. Procédé selon la revendication 5, caractérisé en ce que les motifs sont différent d'une partie (91) de l'espace à l'autre, en fonction de l'altitude.

7. Procédé selon l'une quelconque des revendications 5 ou 6, caractérisé en ce que lé nombre p est différent d'une partie (91) de l'espace à l'autre, en fonction de l'altitude.

8. Procédé selon l'une quelconque des revendications 5 à 7, caractérisé en ce que la génération automatique comprend un mode pour un état beau temps et un autre pour un état mauvais temps.

9. Procédé selon l'une quelconque des revendications précédentes, caractérisé en ce que le découpage de l'espace est fonction de l'altitude.

10. Procédé selon la revendication 9, caractérisé en ce que le nombre d'espaces élémentaires de pointage diminue avec l'altitude.

## Patentansprüche

1. Verfahren zur Führung des Strahlenbündels einer Drehantenne mit elektronischer Strahlschwenkung mittels Strahlenbündel-Zielanforderungen (2), dadurch gekennzeichnet, daß durch die Organisation der Verknüpfung der Zielanforderungen, die an ein System (3) zum Bilden des Strahlenbündels über eine Tabelle (74) von Befehlen geliefert werden, die die zur Ausführung der Zielvorgänge erforderlichen Parameter aufweist, wobei die Antenne einen Sichtkegel (6) hat, in dem die elektronische Strahlschwenkung die Realisierung des Zielens ermöglicht, wobei die Position der Antenne nach einem Winkelschritt (5) markiert wird, wobei der Übergang von einem Schritt zu einem anderen ein Synchronisationssignal (73) erzeugt, für jede Antennenumdrehung die Verknüpfung der Befehle nach drei Phasen (71, 72, 75) organisiert ist, die jeweils einer Zone (15, 16, 17) des Raums zugeordnet sind:
- einer ersten Phase (15, 71) der Vorbereitung der angeforderten Zielrichtungen vor ihrem Eintritt in den Sichtkegel, die darin besteht, die Parameter der Befehle zu definieren, die jeder angeforderten Zielrichtung zugeordnet sind;
- einer zweiten Phase (16, 72) der Realisierung der angeforderten Zielrichtungen, die in dem Sichtkegel vorliegen;
- wobei eine neue Tabelle von Befehlen ausgehend von jedem Synchronisationssignal in Abhängigkeit von den noch nicht realisierten Zielrichtungen geschickt wird;
- einer dritten Phase (17, 75) der Markierung der angeforderten Zielrichtungen, die aus dem Sichtkegel ausgetreten und nicht realisiert sind, wobei diese gespeichert und in einer folgenden Umdrehung realisiert werden, wobei eine nicht realisierte Zielrichtung aufgegeben werden kann.

2. Verfahren nach Anspruch 1, dadurch gekennzeichnet, daß die dringenden, während der zweiten Phase angeforderten Zielrichtungen in dieser Phase realisiert werden.

3. Verfahren nach einem der vorhergehenden Ansprüche, dadurch gekennzeichnet, daß sich die der ersten (71) und der dritten Phase zugeordneten Zonen (15, 17) nicht überlappen.

4. Verfahren nach einem der vorhergehenden Ansprüche, dadurch gekennzeichnet, daß die Befehle für Zielrichtungen, die für eine Überwachungsfunktion bestimmt sind, automatisch erzeugt werden (82) und wie die anderen Zielanforderungen (81) nach den drei Phasen (71, 72, 75) verarbeitet werden.

5. Verfahren nach Anspruch 4, dadurch gekennzeichnet, daß, weil der Raum um die Antenne in Zielrichtungselementarräume zerschnitten ist und die Elementarräume (12) für die automatische Erzeugung in Spalten (11) eingeschrieben sind, die Zielrichtungen in eine Anzahl p von aufeinanderfolgenden Mustern gruppiert sind, wobei p die Anzahl von Antennenumdrehungen ist, die erforderlich sind, damit die Wiederholung von Mustern den betrachteten Raum (91) überdeckt, wobei jedes Muster (92) aus einer Anzahl r von aufeinanderfolgenden Spalten gewählt ist, wobei am Ende von r Spalten der Übergang auf ein folgendes Muster (93) stattfindet und wobei am Ende von pxr Spalten die Rückkehr zu dem ersten Muster (92) stattfindet.

6. Verfahren nach Anspruch 5, dadurch gekennzeichnet, daß die Muster von einem Teil (91) des Raums zum anderen in Abhängigkeit von der Höhe unterschiedlich sind.

7. Verfahren nach einem der Ansprüche 5 oder 6, dadurch gekennzeichnet, daß die Anzahl p von einem Teil (91) des Raums zum anderen in Abhängigkeit von der Höhe unterschiedlich ist.

8. Verfahren nach einem der Ansprüche 5 bis 7, dadurch gekennzeichnet, daß die automatische Erzeugung einen Modus für einen Schönwetterzustand und einen weiteren für einen Schlechtwetterzustand aufweist.

9. Verfahren nach einem der vorhergehenden Ansprüche, dadurch gekennzeichnet, daß der Ausschnitt des Raums von der Höhe abhängt.

10. Verfahren nach Anspruch 9, dadurch gekennzeichnet, daß die Anzahl von Zielrichtungselementarräumen mit der Höhe abnimmt.

## Claims

1. Method for the management of the beam of an electronically scanned rotating antenna on the basis of requests for the aiming of the beam (2), organizing the sequencing of the aiming commands given to a system for the formation of the beam (3) by means of a table of commands (74) comprising the parameters needed to carry out the aiming operations, the antenna having a visibility cone (6) in which the electronic scanning enables the aiming operations to be performed, the position of the antenna being identified according to an angular step (5), the passage from one step to another generating a synchronization signal (73), for each antenna rotation, the sequencing of the commands is organized in three phases (71, 72, 75), each associated with one zone (15, 16, 17) of space:
- a first phase (15, 71) of preparation of the requested aiming operations before their entry into the visibility cone, consisting in defining the parameters of the table of the commands associated with each requested aiming operation;
- a second phase (16, 72) of performing the requested aiming operations present in the visibility cone,
- a new table of commands being sent on the basis of each synchronization signal as a function of the aiming operations that have not yet been performed;
- a third phase (17, 75) of identifying the requested aiming operations that have come out from the visibility cone and have not been performed, these being memorized and performed in a following rotation, it being possible for a non-performed aiming operation to be relinquished.

2. Method according to claim 1, characterized in that urgent aiming operations requested during the second phase are performed in this phase.

3. Method according to any one of the preceding claims, characterized in that the zones (15, 17) associated with the first (71) and third phases do not overlap.

4. Method according to any one of the preceding claims, characterized in that the requests for aiming operations designed for a watching function are generated automatically (82) and processed like the other requests for aiming operations (81) according to the three phases (71, 72, 75).

5. Method according to claim 4 characterized in that, with the space around the antenna being partitioned into elementary aiming spaces, the elementary spaces (12) being inscribed in columns (11), for automatic generation, the aiming operations are assembled in a number p of consecutive patterns, p being the number of antenna rotations necessary for the repetition of patterns to cover the space considered (91), each pattern (92) being chosen on a number r of consecutive columns, the passage being made to a following pattern (93) at the end of r columns, the return being made to the first pattern (92) at the end of p x r columns.

6. Method according to claim 5, characterized in that the patterns are different from one part (91) of the space to another, as a function of the altitude.

7. Method according to either of claims 5 and 6, characterized in that the number p is different from one part (91) of the space to another, as a function of the altitude.

8. Method according to any one of claims 5 to 7, characterized in that the automatic generation includes one mode for a good weather state and another mode for a bad weather state.

9. Method according to any one of the preceding claims, characterized in that the partitioning of the space is a function of the altitude.

10. Method according to claim 9, characterized in that the number of elementary aiming spaces diminishes with the altitude.
